# EUROPEAN PATENT APPLICATION

(11) **EP 4 227 367 A1**
(43) Date of publication of application: **16.08.2023**
(21) Application number: 22888601.6
(22) Date of filing: 28.11.2022
(51) Int. Cl.: C08L 95/00, C04B 26/26

(54) **EMULSIFIED CEMENTING MATERIAL, EMULSIFIED ASPHALT, PREPARATION METHOD THEREFOR AND APPLICATION THEREOF**

(30) Priority: 08.12.2021 CN 202111493006; 08.12.2021 CN 202111491806
(71) Applicant: Xiyuefa International Environmental Protection New Materials Co., Ltd., Taiyuan City, Shanxi 030100 (CN)
(72) Inventor: XU, Quanxin, Taiyuan City Shanxi 030100 (CN); LIU, Xiaobin, Taiyuan City Shanxi 030100 (CN); LOMMERTS, Bert Jan, Taiyuan City Shanxi 030100 (CN); LIU, Yue, Taiyuan City Shanxi 030100 (CN); MA, Hongwei, Taiyuan City Shanxi 030100 (CN); XU, Jianjun, Taiyuan City Shanxi 030100 (CN); ZHANG, Xin, Taiyuan City Shanxi 030100 (CN); JIE, Hongbing, Taiyuan City Shanxi 030100 (CN); ZHAO, Yuheng, Taiyuan City Shanxi 030100 (CN); ZHAO, Yongfei, Taiyuan City Shanxi 030100 (CN)
(74) Representative: Valea AB
(86) International application number: PCT/CN2022/134656
(87) International publication number: WO 2023/103821

(57) **Abstract**

The present application discloses a binder emulsion, a bitumen emulsion, a preparation method and application thereof. The binder emulsion comprises the following components dispersed in water: 100 parts by mass of a binder, from 10 to 30 parts by mass of clay, and from 0.01 to 1.5 parts by mass of protonic acid. In the binder emulsion provided in the present application, the binder is emulsified with the clay/protonic acid emulsifying system. The resulting binder emulsion can stably suspend more aggregates while the viscosity remains unchanged, which can increase the solid content of the fog seal mixture with sand and thus improve wear resistance and durability of the pavement.

## Description

### CROSS REFERENCE TO RELATED APPLICATION

The present application claims the priority to Chinese Patent Application No. 202111493006.3 filed on December 8, 2021, and titled "BITUMEN EMULSION, PREPARATION METHOD THEREOF AND BITUMEN MIXTURE", and the priority to Chinese Patent Application No. 202111491086.1 filed on December 8, 2021, and titled "BINDER EMULSION, PREPARATION METHOD THEREOF AND FOG SEAL MIXTURE WITH SAND", both of which are incorporated herein by reference in their entireties.

### TECHNICAL FIELD

The present application relates to the field of road maintenance, in particular to a binder emulsion, a bitumen emulsion, a preparation method and application thereof.

### BACKGROUND

Fog seal with sand (also referred to as "sand fog seal") originated from the early road protection technology, and then gradually developed into an excellent means of prevention and maintenance. Fog seal with sand breaks the construction process of traditional fog seal technology, by mixing fine sand with bitumen emulsion or binder emulsion, adding additives with special ingredients to obtain evenly and stably suspended materials, and then spraying on road surface through high-pressure equipment. Fog seal with sand eliminates the two-step process of sanding and rubber wheel rolling afterwards. Moreover, since the fine sand can be fully coated by adhesive cement, it is more uniform, firm and stable than sanding and rolling.

However, among the existing fog seal mixtures with sand (also referred to as "sand fog seal mixtures") that can be sprayed, the content of aggregates that can be stably suspended by using a binder emulsion is usually small. When the content of the added aggregates exceeds a certain value, sedimentation and agglomeration will occur. As a result, it is difficult to further increase the content of aggregates suspended in the fog seal mixture with sand, which limits the improvement of durability and resistance of pavement. In addition, with the existing fog seal mixtures with sand, it is difficult to use standard spraying equipment for continuous large-scale mechanized spraying, because the binder emulsion is not stable enough and may easily block the spraying equipment due to agglomeration during mechanical spraying. Moreover, the existing sand fog seal mixtures that can be sprayed is usually black, which results in single color of the pavement formed by applying the mixtures and thus cannot meet the needs for road beautification and traffic guidance in cities.

### SUMMARY

In view of the above, the present application provides a binder emulsion and a bitumen emulsion that can stably suspend more aggregates, the preparation method and the application thereof.

A first aspect of the present application provides a binder emulsion, comprising the following components dispersed in water:

100 parts by mass of a binder, from 10 to 30 parts by mass of clay, and from 0.01 to 1.5 parts by mass of protonic acid, wherein the binder emulsion has a pH value of from 2 to 12, and preferably from 6.5 to 7.5.

According to any of embodiments of the first aspect of the application, the binder emulsion has an average particle size of from 3 µm to 50 µm and preferably from 5 µm to 20 µm.

According to any of embodiments of the first aspect of the application, the clay comprises 100 parts by mass of SiO₂ and from 40 to 90 parts by mass of Al₂O₃.

According to any of embodiments of the first aspect of the application, the protonic acid comprises organic acid and/or inorganic acid,

wherein the organic acid comprises one or more of citric acid, malic acid, tartaric acid, acetic acid, malonic acid, succinic acid, oxalic acid, succinic acid and maleic acid; and/or the inorganic acid comprises one or more of hydrochloric acid, boric acid and phosphoric acid.

According to any of embodiments of the first aspect of the application, the binder comprises a first binder and/or a second binder, wherein the first binder comprises:

100 parts by mass of heavy oil, from 50 to 100 parts by mass of petroleum resin, and from 0 to 1 parts by mass of adhesion promoter.

According to any of embodiments of the first aspect of the application, the second binder comprises:

100 parts by mass of heavy oil, from 50 to 100 parts by mass of petroleum resin, from 0 to 50 parts by mass of ethylene vinyl acetate copolymer, from 0 to 20 parts by mass of styrene-butadiene-styrene block copolymer, and from 0 to 1 parts by mass of adhesion promoter.

According to any of embodiments of the first aspect of the application, the heavy oil has a kinematic viscosity at 100 °C of from 20 to 100 mm²/s; and/or
the petroleum resin has a softening point of from 70 to 170°C; and/or
the petroleum resin has an acid value of from 0 to 16, preferably from 2 to 16.

A second aspect of the present application provides a method for preparing a binder emulsion, comprising:
mixing and dispersing a clay and a protonic acid evenly in water, to obtain a first mixture;
mixing and stirring the first mixture and a binder at an elevated temperature to emulsify the binder and obtain the binder emulsion (also referred to as "an emulsified binder").

A third aspect of the present application provides a fog seal mixture with sand, comprising:
100 parts by mass of the binder emulsion provided in the first aspect of the present application or prepared by the method provided in the second aspect of the present application; and from 5 to 70 parts by mass of an aggregate.

According to any of embodiments of the third aspect of the application, the aggregate comprises one or more of quartz sand, corundum sand, carborundum sand and water washed sand.

According to any of embodiments of the third aspect of the application, the mixture further comprises:
from 0 to 20 parts by mass, preferably from 5 to 20 parts by mass, of auxiliary powder; from 0 to 20 parts by mass, preferably from 5 to 20 parts by mass, of pigment; and from 0 to 50 parts by mass, preferably from 5 to 20 parts by mass, of latex additive.

According to any of embodiments of the third aspect of the application, the auxiliary powder comprises one or more of titanium dioxide powder, kaolin, heavy calcium, talc powder and microsilica; and/or
the latex additive comprises one or more of acrylic latex, one-component waterborne epoxy resin, two-component waterborne epoxy resin, one-component waterborne polyurethane, two-component waterborne polyurethane and styrene-butadiene copolymer latex.

A fourth aspect of the present application provides a modified fog seal mixture with sand, comprising:
100 parts by mass of the fog seal mixture with sand provided in the third aspect of the present application; and from 0 to 20 parts by mass, preferably from 5 to 10 parts by mass, of an emulsion rejuvenating agent.

According to any of embodiments of the fourth aspect of the application, the emulsion rejuvenating agent comprises a mixture of scleroglucah and cationic emulsifier.

A fifth aspect of the present application provides a bitumen emulsion, comprising the following components dispersed in water:

100 parts by mass of a bitumen, from 10 to 30 parts by mass of clay, from 0.01 to 1.5 parts by mass of protonic acid, wherein the bitumen emulsion has a pH value of from 2 to 12, and preferably from 6.5 to 7.5.

According to any of embodiments of the fifth aspect of the application, the bitumen emulsion has an average particle size of from 3 µm to 50 µm and preferably from 5 µm to 20 µm.

According to any of embodiments of the fifth aspect of the application, the clay comprises 100 parts by mass of SiO₂ and from 40 to 90 parts by mass of Al₂O₃.

According to any of embodiments of the fifth aspect of the application, the protonic acid comprises organic acid and/or inorganic acid,
wherein the organic acid comprises one or more of citric acid, malic acid, tartaric acid, acetic acid, malonic acid, succinic acid, oxalic acid, succinic acid and maleic acid; and the inorganic acid comprises one or more of hydrochloric acid, boric acid and phosphoric acid.

According to any of embodiments of the fifth aspect of the application, the bitumen comprises a modified bitumen comprising:
100 parts by mass of a first base bitumen, from 0 to 45 parts by mass of a second base bitumen, from 0 to 15 parts by mass of ethylene vinyl acetate copolymer, from 0 to 20 parts by mass of styrene-butadiene-styrene block copolymer, and from 0 to 25 parts by mass of petroleum resin.

According to any of embodiments of the fifth aspect of the application, the modified bitumen comprises:
100 parts by mass of a first base bitumen, from 15 to 45 parts by mass of a second base bitumen, from 5 to 15 parts by mass of ethylene vinyl acetate copolymer, from 5 to 15 parts by mass of styrene-butadiene-styrene block copolymer, and from 10 to 25 parts by mass of petroleum resin.

According to any of embodiments of the fifth aspect of the application, the first base bitumen has a needle penetration of from 60 to 120; and/or
the second base bitumen has a needle penetration of from 1 to 30; and/or
the petroleum resin has an acid value of from 0 to 16.

A sixth aspect of the present application provides a method for preparing a bitumen emulsion, comprising:
mixing and dispersing a clay and a protonic acid evenly in water to obtain a first mixture;
mixing and stirring the first mixture and a bitumen at an elevated temperature to emulsify the bitumen and obtain the bitumen emulsion (also referred to as "an emulsified bitumen").

A seventh aspect of the present application provides a bitumen mixture, comprising:
100 parts by mass of the bitumen emulsion provided in the fifth aspect of the present application; and from 10 to 70 parts by mass of an aggregate.

According to any of embodiments of the seventh aspect of the application, the aggregate comprises one or more of quartz sand, corundum sand, carborundum sand and water washed sand.

According to any of embodiments of the seventh aspect of the application, the mixture further comprises:
from 0 to 20 parts by mass, preferably from 5 to 20 parts by mass, of latex additive;
wherein the latex additive comprises one or more of acrylic latex, one-component waterborne epoxy resin, two-component waterborne epoxy resin, one-component waterborne polyurethane, two-component waterborne polyurethane and styrene-butadiene copolymer latex.

An eighth aspect of the present application provides a modified bitumen mixture, comprising:
100 parts by mass of the bitumen mixture provided in the seventh aspect of the present application; and from 0 to 10 parts by mass, preferably from 5 to 10 parts by mass, of an emulsion rejuvenating agent.

According to any of embodiments of the eighth aspect of the application, the emulsion rejuvenating agent comprises a mixture of scleroglucah and cationic emulsifier.

A ninth aspect of the present application provides a mixture system, comprising:
the fog seal mixture with sand provided in the third aspect of the present application, the modified fog seal mixture with sand provided in the fourth aspect of the present application, the bitumen mixture provided in the seventh aspect of the present application, or the modified bitumen mixture provided in the eighth aspect of the present application; and
a solution used to adjust the viscosity of the mixture system.

According to any of embodiments of the ninth aspect of the application, the solution comprises an acidic solution and/or an alkaline solution;
wherein the acidic solution has a pH value of from 1 to 3; and/or
the alkaline solution has a pH value of from 10 to 12.

A tenth aspect of the present application provides a pavement structure, characterized in that the pavement structure comprises one or more of the fog seal mixture with sand provided in the third aspect of the present application, the modified fog seal mixture with sand provided in the fourth aspect of the present application, the bitumen mixture provided in the seventh aspect of the present application, the modified bitumen mixture provided in the eighth aspect of the present application and the mixture system provided in the ninth aspect of the present application.

Compared with the prior art, the present application has at least the following beneficial effects:

In the binder emulsion provided in the present application, the binder is emulsified with the clay/protonic acid emulsifying system. The resulting binder emulsion can stably suspend more aggregates while the viscosity remains unchanged, which can increase the solid content of the fog seal mixture with sand and thus improve wear resistance and durability of the pavement sprayed with the fog seal mixture with sand.

In addition, the clay/protonic acid emulsifying system can also improve the stability of the binder emulsion and reduce the sensitivity of the fog seal mixture with sand to high shear force, thereby allowing the continuous large-scale mechanized spraying of fog seal mixture with sand.

Moreover, since the binder in the binder emulsion is translucent, the color of the fog seal mixture with sand can be adjusted by adding pigment in the fog seal mixture with sand, so as to obtain a colored fog seal mixture with sand, which can improve the road beautification effect of a city.

### DETAILED DESCRIPTION

In order to make the object, technical solution, and technical effects of the present application clearer, the following further describes the present application in details with reference to the embodiments. It should be understood that the embodiments described in the present description are only for explaining the present application, and are not intended to limit the application.

For the sake of brevity, only certain numerical ranges are explicitly disclosed herein. However, any lower limit may be combined with any upper limit to form a range that is not explicitly described; and any lower limit may be combined with other lower limit to form an unspecified range; and any upper limit may be combined with any other upper limit to form an unspecified range. Further, although not explicitly specified, each point or single value between the endpoints of a range is included in the range. Thus, each point or single value can be combined with any other point or single value or combined with other lower or upper limits to form a range that is not explicitly specified.

In the description herein, it should be noted that, unless otherwise specified, a numeric range described with the term "above" or "below" includes all numbers within that range including the endpoints. The recitation of "more" in the phrase "one or more" means two or more.

The above summary of this application is not intended to describe each disclosed embodiment or every implementation in this application. The following description illustrates exemplary embodiments more specifically. In many places throughout the application, guidance is provided through a series of examples, which can be used in various combinations. In each instance, the enumeration is only a representative group and should not be interpreted as exhaustive.

A first aspect of the present application provides a binder emulsion, comprising the following components dispersed in water: 100 parts by mass of a binder, from 10 to 30 parts by mass of clay, from 0.01 to 1.5 parts by mass of protonic acid, wherein the binder emulsion has a pH value of from 2 to 12, and preferably from 6.5 to 7.5.

A fifth aspect of the present application provides a bitumen emulsion, comprising the following components dispersed in water: 100 parts by mass of a bitumen, from 10 to 30 parts by mass of clay, from 0.01 to 1.5 parts by mass of protonic acid, wherein the bitumen emulsion has a pH value of from 2 to 12, and preferably from 6.5 to 7.5.

In the binder emulsion and bitumen emulsion provided in the present application, the binder and bitumen are emulsified with the clay/protonic acid emulsifying system. The resulting binder emulsion and bitumen emulsion can stably suspend more aggregates while the viscosity remains unchanged, which can increase the solid content of the fog seal mixture with sand and the solid content of the bitumen mixture and thus improve wear resistance and durability of the pavement sprayed with the fog seal mixture with sand and the bitumen mixture.

In addition, the clay/protonic acid emulsifying system can also improve the stability of the binder emulsion and the bitumen emulsion, and reduce the sensitivity of the fog seal mixture with sand and the bitumen emulsion to high shear force, thereby allowing the continuous large-scale mechanized spraying of fog seal mixture with sand and the bitumen emulsion.

Moreover, since the binder in the binder emulsion is translucent, the color of the fog seal mixture with sand can be adjusted by adding pigment in the fog seal mixture with sand, so as to obtain a colored fog seal mixture with sand, which can improve the road beautification effect of a city.

In some embodiments, the binder emulsion and the bitumen emulsion have a pH value of from 2.0 to 12.0. Preferably, the binder emulsion and the bitumen emulsion have a pH value of from 6.5 to 7.5.

In some embodiments, the binder emulsion and the bitumen emulsion have an average particle size of from 3 µm to 50 µm. Preferably, the binder emulsion and the bitumen emulsion have an average particle size of from 5 µm to 20 µm.

In the embodiments of the present application, by controlling the pH value and average particle size of the binder emulsion and the bitumen emulsion within the appropriate ranges, the binder and the bitumen can be emulsified without using any other conventional emulsifiers. It is beneficial to the storage stability and construction stability (long-term storage at room temperature, reducing the blockage in pipeline, filter and nozzle during mechanical construction, etc.) of the binder emulsion and the bitumen emulsion, the fog seal mixture with sand and the bitumen mixture.

In the binder emulsion in the embodiments of the present application, the improved suspension and dispersion of aggregates (i.e. sand) are achieved by not only increasing the physical viscosity of the binder emulsion, but also adding (organic and inorganic) protonic acids to adjust the charge and polarity interactions between the clay and the binder, between latex particles of the binder, and between latex particles of the binder and aggregates.

In the bitumen emulsion in the embodiments of the present application, the improved suspension and dispersion of aggregates (i.e. sand) are achieved by not only increasing the physical viscosity of the bitumen emulsion, but also adding (organic and inorganic) protonic acids to adjust the charge and polarity interactions between the clay and the bitumen, between latex particles of the bitumen, and between latex particles of the bitumen and aggregates.

Clay is a silicate with lamellar structure, and clays from different sources may have different composition. If oxides such as SiO₂, Al₂O₃, Fe₂O₃, FeO, TiO₂, CaO, MgO, KzO, NazO, PzOs, etc. are used to describe the composition of clay, then one of the most important components is SiOz. According to the structure and composition, clay can be divided into clays with higher Al₂O₃ content, such as kaolinite, illite, chlorite, etc.; and clays with lower Al₂O₃ content, such as hectorite, bentonite, montmorillonite, etc. If the content of SiO₂ is defined as 100 parts by mass, the content of Al₂O₃ is about 51.4 to 84.4 parts by mass in kaolinite, about 77.2 parts by mass in illite, about 60.4 parts by mass in chlorite, and 22.6 parts by mass in bentonite.

When protonic acid is added to clay suspension, the cations (such as Na⁺, K⁺, Ca²⁺, Mg²⁺, Al³⁺) between the sheets can be partially replaced by H⁺ ions, and the layered clay disintegrates into thin flakes. When the pH value is relatively low, the replacement degree would be relatively high; the acid radical anions are adsorbed on the clay, while the replaced cations are enriched in the periphery of the acid radical anion layer, thus forming an acid radical anion/cation double layer around the clay flakes. As a result, the clay flakes repel each other and are suspended in the water phase, forming an acidified clay water emulsion.

The ions and polar groups in the acidified clay can interact with polar compounds containing oxygen, nitrogen, and sulfur in the binder and bitumen to form onium compounds, so that the acidified clay flakes can be enriched on the surface of the binder droplet and bitumen droplet formed by stirring and can partially or completely replace the emulsifier to emulsify the binder and bitumen. The bond energy between metal cations (such as Na⁺, Ca²⁺, Al³⁺) that are replaced by H⁺ ions in clay, and acid radical anions on the surface of clay flakes is greater than the hydration energy of these ions, thereby enriching these ions on the surface of latex particles of binder and the surface of latex particles of bitumen. The surface of the fine aggregates is negatively charged, thus the fine aggregates attract the positive ions enriched on the surface of latex particles of binder and the surface of latex particles of bitumen, which increases the suspension force of the fine aggregates in the acidified clay binder emulsion and acidified clay bitumen emulsion.

In the embodiments of the present application, the content of Al₂O₃ in the clay is an important indicator. If bentonite (a kind of clay) with low Al₂O₃ content is used, the emulsification effect on binder and bitumen is relatively poor. This is because each Al³⁺ has more positive charges and needs to be replaced by 3 H⁺ ions. Thus, when the content of Al₂O₃ in the clay is relatively high, the grafting density of acid radical molecules on the surface of clay increases, which is equivalent to increasing the thickness of the stabilized layer on the surface of latex particles of the binder and the surface of latex particles of the bitumen. Therefore, at the same acidic pH value, clay with higher Al₂O₃ content has a better emulsifying effect on binder and bitumen. Preferably, in the present application, a clay with higher Al₂O₃ content is used.

The acidified clay binder emulsion system and the acidified clay bitumen emulsion system in this application can better suspend fine aggregates, and can suspend more fine aggregates at the same viscosity, thereby increasing the solid content of the fog seal mixture with sand and the solid content of the bitumen mixture (that is, water content is relatively reduced) and shortening the forming time and the controlled time prior to opening traffic of binder pavement and bitumen pavement.

In some embodiments, the type of the binder in the binder emulsion is not particularly limited and can be determined according to actual needs, and various binders known in the art may be used. Preferably, the binder is selected from the first binder and/or the second binder provided in this application.

In some embodiments, the binder comprises a first binder and/or a second binder, wherein the first binder comprises: 100 parts by mass of heavy oil, from 50 to 100 parts by mass of petroleum resin, and from 0 to 1 parts by mass of adhesion promoter.

In some embodiments, the second binder is a modified binder obtained by modifying the first binder. Preferably, the modified binder has a needle penetration of from 1 to 100.

In some embodiments, the raw materials for the modified binder comprises: 100 parts by mass of heavy oil, from 50 to 100 parts by mass of petroleum resin, from 0 to 50 parts by mass of ethylene vinyl acetate copolymer, from 0 to 20 parts by mass of styrene-butadiene-styrene block copolymer, and from 0 to 1 parts by mass of adhesion promoter.

In some embodiments, the heavy oil has a kinematic viscosity at 100°C of from 20 to 100 mm²/s.

In some embodiments, the petroleum resin has a softening point of from 70 to 170°C.

In some embodiments, the petroleum resin has an acid value of from 0 to 16, preferably from 2 to 16.

In embodiments of this application, the needle penetration of the binder can be defined as the depth that a standard needle (generally with a total mass of 100 g ± 0.05 g) sinks into a grease sample at 25°C within 5 seconds. The greater the needle penetration, the softer the grease, that is, the smaller the consistency; otherwise, the harder the grease, that is, the greater the consistency.

In the embodiments of the present application, the kinematic viscosity of heavy oil at 100°C refers to the ratio of the dynamic viscosity of petroleum to the density of petroleum at 100°C. The kinematic viscosity can be measured by a fully automatic kinematic viscometer using countercurrent method. The kinematic viscosity refers to the ratio of the internal frictional force of petroleum on the unit contact area to the change rate of flow velocity in the direction perpendicular to the flow.

In the embodiments of the present application, the softening point of the petroleum resin refers to the temperature at which the solid petroleum resin becomes viscous as the temperature rises. The softening point can be measured by using a ring and ball apparatus for softening point.

As a specific example, the raw materials of the first binder may comprise: 50 parts by mass of heavy oil (with a kinematic viscosity at 100°C of 50 mm²/s), 46.8 parts by mass of C9 petroleum resin (Novares T140), and 0.2 parts by mass of adhesion promoter (REDICOTE E-85, oleamidopropyl dimethylamine (CAS: 109-28-4)).

As a specific example, the raw materials of the second binder may comprise: 50 parts by mass of heavy oil (with a kinematic viscosity at 100°C of 50 mm²/s), 46.8 parts by mass of C9 petroleum resin (Novares T140), 3 parts by mass of ethylene vinyl acetate copolymer (Escorene UL04533EH2), and 0.2 parts by mass of adhesion promoter (REDICOTE E-85, oleamidopropyl dimethylamine (CAS: 109-28-4)).

In some embodiments, the ethylene vinyl acetate copolymer in the second binder may also be replaced by other polymers. Preferably, other polymers may comprise styrene-butadiene diblock or styrene-butadiene-styrene triblock polymers and the like.

In some embodiments, the method for preparing the binder may comprise:

S02, heating the heavy oil to a temperature of from 140°C to 145°C, and dispersion stirring;

S04, slowly adding petroleum resin, ethylene vinyl acetate copolymer, and styrene-butadiene-styrene block copolymer (if any) according to the formula, maintaining the temperature at 140°C-145°C, and dispersion stirring;

S06, adding an adhesion promoter according to the formula, and continuing to dispersion stir to obtain a modified light-colored binder.

In some embodiments, the speed of dispersion stirring in the above preparation step S02 may be 800 rad/min, and the stirring time may be 10 min.

In some embodiments, the speed of dispersion stirring in the above preparation step S04 may be 1500 rad/min, and the stirring time may be 1h.

In some embodiments, the time of dispersion stirring in the above preparation step S06 may be 10-15 minutes.

In some embodiments, the type of bitumen in the bitumen emulsion is not particularly limited and can be selected according to actual needs. Various bitumens known in the art can be used, such as coking coal bitumen, petroleum bitumen and natural bitumen, etc. The modified bitumen with low needle penetration provided in the embodiments of the present application may be used.

In some embodiments, the modified bitumen prepared in the embodiments of the present application has a needle penetration of from 0 to 40. Preferably, the modified bitumen has a needle penetration of from 0 to 30. More preferably, the modified bitumen has a needle penetration of from 0 to 20. In some embodiments, the modified bitumen has a softening point of not lower than 60°C.

In embodiments of this application, the needle penetration of the bitumen can be defined as the depth that a standard needle (generally with a total mass of 100 g ± 0.05 g) sinks into a grease sample at 25°C within 5 seconds. The greater the needle penetration, the softer the grease, that is, the smaller the consistency; otherwise, the harder the grease, that is, the greater the consistency.

In some embodiments, the raw materials of the modified bitumen comprises: 100 parts by mass of a first base bitumen, from 0 to 45 parts by mass of a second base bitumen, from 0 to 15 parts by mass of ethylene vinyl acetate copolymer, from 0 to 20 parts by mass of styrene-butadiene-styrene block copolymer, and from 0 to 25 parts by mass of petroleum resin.

Preferably, the raw materials of the modified bitumen comprises: 100 parts by mass of a first base bitumen, from 15 to 45 parts by mass of a second base bitumen, from 5 to 15 parts by mass of ethylene vinyl acetate copolymer, from 5 to 15 parts by mass of styrene-butadiene-styrene block copolymer, and from 10 to 25 parts by mass of petroleum resin.

In some embodiments, the first base bitumen has a needle penetration of from 60 to 120.

In some embodiments, the second base bitumen has a needle penetration of from 1 to 30.

In some embodiments, the petroleum resin has an acid value of from 0 to 16.

In some embodiments, the mixture of the first base bitumen and the second base bitumen may also be replaced by a single base bitumen having the same composition as said mixture.

In some embodiments, the raw materials of the modified bitumen comprises: 100 parts by mass of a base bitumen, from 0 to 20 parts by mass of petroleum resin, from 0 to 10 parts by mass of ethylene vinyl acetate copolymer, and from 0 to 1 parts by mass of adhesion promoter.

As a specific example, the raw materials of the modified bitumen may comprise: 100 parts by mass of base bitumen (with a needle penetration of 70), 11.5 parts by mass of petroleum resin (Novares T140M), 3.5 parts by mass of ethylene vinyl acetate copolymer (Escorene UL04533EH2), and 0.35 parts by mass of adhesion promoter (REDICOTE E-85, oleamidopropyl dimethylamine (CAS: 109-28-4)).

In some embodiments, the ethylene vinyl acetate copolymer in the modified bitumen may also be replaced by other polymers. Preferably, other polymers may comprise styrene-butadiene diblock or styrene-butadiene-styrene triblock polymers and the like.

In some embodiments, the petroleum resin in the modified bitumen has an acid value of from 0 to 16. Preferably, the petroleum resin in the modified bitumen has an acid value of from 8 to 11.

In some embodiments, the base bitumen in the modified bitumen has a needle penetration of from 40 to 110. Preferably, the base bitumen in the modified bitumen has a needle penetration of from 60 to 100.

In some embodiments, the method for preparing the modified bitumen may comprise:

S12, heating the base bitumen to a temperature of from 160°C to 165°C, and dispersion stirring;

S14, slowly adding ethylene vinyl acetate copolymer, petroleum resin, and styrene-butadiene-styrene block copolymer (if any) according to the formula, maintaining the temperature at 160°C-165°C, and dispersion stirring;

S16, adding an adhesion promoter according to the formula, and continuing to dispersion stir to obtain a modified bitumen.

In some embodiments, the speed of dispersion stirring in the above preparation step S12 may be 1000 rad/min, and the stirring time may be 10 min.

In some embodiments, the speed of dispersion stirring in the above preparation step S14 may be 1000 rad/min, and the stirring time may be 1h.

In some embodiments, the time of dispersion stirring in the above preparation step S16 may be 15 minutes.

In some embodiments, the raw materials of the modified bitumen comprise: 100 parts by mass of base bitumen, from 0 to 100 parts by mass of anti-rutting masterbatch, from 0 to 2 parts by mass of adhesion promoter.

As a specific example, the raw materials of the modified bitumen comprise: 100 parts by mass of base bitumen, 30 parts by mass of anti-rutting masterbatch (available from Luoyang Petrochemical), and 0.43 parts by mass of adhesion promoter (REDICOTE E-85, oleamidopropyl dimethylamine (CAS: 109-28-4)).

In some embodiments, the base bitumen in the modified bitumen has a needle penetration of from 40 to 110. Preferably, the base bitumen in the modified bitumen has a needle penetration of from 60 to 100.

In some embodiments, the method for preparing the modified bitumen may comprise:

S52, heating the base bitumen to a temperature of from 155°C to 160°C, and dispersion stirring;

S54, slowly adding anti-rutting masterbatch according to the formula, maintaining the temperature at from 155°C to 160°C, and dispersion stirring;

S56, adding an adhesion promoter according to the formula, and continuing to dispersion stir to obtain a modified bitumen.

In some embodiments, the speed of dispersion stirring in the above preparation step S52 may be 1000 rad/min, and the stirring time may be 10 min.

In some embodiments, the speed of dispersion stirring in the above preparation step S54 may be 1000 rad/min, and the stirring time may be 1h.

In some embodiments, the time of dispersion stirring in the above preparation step S56 may be 15 minutes.

In embodiments of this application, the modified binder and the modified bitumen with relatively low needle penetration are prepared by modifying a first binder and a base bitumen. After adding clay/protonic acid emulsifying system to the modified binder and the modified bitumen, the activated clay is dispersed in water to form the tiny colloidal particles (with a diameter of less than 3 µm) having strong adsorption. When hot modified binder and the clay solution are stirred under high-strength shear, the hot modified binder is cut and dispersed into microparticles (with an average particle size of 5-30 µm) in the clay solution, and the clay particles are adsorbed around the modified binder microparticles to form a protective film which has a certain strength and is not easy to be destroyed and can prevent the re-coagulation of the modified binder particles to form a stable oil-in-water binder emulsion. When hot bitumen and the clay solution are stirred under high-strength shear, the hot bitumen is cut and dispersed into microparticles (with an average particle size of 5-30 µm) in the clay solution, and the clay particles are adsorbed around the bitumen microparticles to form a protective film which has a certain strength and is not easy to be destroyed and can prevent the re-coagulation of the bitumen particles to form a stable oil-in-water bitumen emulsion. In addition, chemical or physical interactions will also occur between the modified binder and clay, and between bitumen and clay. For example, exchange reactions may occur between acids in the modified binder and the cations on the surface of mineral particles, or between nitrogen-containing compound in the modified binder and exchangeable cations of clay. Exchange reactions may occur between acids in the bitumen and the cations on the surface of mineral particles, or between nitrogen-containing compound in the bitumen and exchangeable cations of clay. In addition, there are bound sulfur and oxygen in the modified binder and the modified bitumen, and polar compounds always exist; compounds with a certain high polarity may replace the water molecules adsorbed on the surface of the clay. As a result, the modified binder and the modified bitumen can also be emulsified, thereby allowing to change the current situation that the binder and bitumen with low needle penetration are difficult to be emulsified for application in road systems.

In the modified binder and the modified bitumen in the embodiments of the present application, the binder emulsion with low needle penetration and bitumen emulsion with low needle penetration are obtained by emulsifying with a clay/protonic acid emulsifying system. The clay/protonic acid emulsifying system can improve the stability of the binder emulsion with low needle penetration and bitumen emulsion with low needle penetration, and reduce their sensitivity to high shear stress. The binder emulsion with low needle penetration and bitumen emulsion with low needle penetration can stably suspend a large amount of aggregates aggregate, thereby forming a high-viscosity sand fog seal mixture and bitumen mixture.

The above-mentioned high-viscosity sand fog seal mixture and high-viscosity bitumen mixture have a certain strength and are not easy to be damaged because the clay particles are respectively adsorbed around the binder microparticles and the bitumen microparticles to form a protective film which has a certain strength and is not easy to be destroyed. In the process of using standard pumping or spraying equipment for pavement construction, even under the effect of high shear force, the binder emulsion and the bitumen emulsion in the mixture will not be broken and not block the spraying equipment, thereby achieving the continuous large-scale mechanized spraying construction and solving the problem existing in the prior art of agglomeration and blockage of the high-viscosity sand fog seal mixture and high-viscosity bitumen mixture under the action of high shear force and thus the problem of inability to be sprayed continuously. Demulsification is the agglomeration of dispersed binder phase and bitumen phase caused by the instability of binder emulsion under high shear force, and produces binder agglomerates and bitumen agglomerates in the mixture.

In some embodiments, the components of the clay comprises: 100 parts by mass of SiO₂, and 60-75 parts by mass of Al₂O₃. Preferably, the clay has an average particle size of D≤20 µm.

In some embodiments, the components of the clay may further comprise: 6-8 parts by mass of TiO₂, 4.5-6.5 parts by mass of Fe₃O₄, 1-1.5 parts by mass of CaO, 1-1.5 parts by mass of MgO, 1-1.5 parts by mass of K₂O, and 0.1 to 0.2 parts by mass of Na₂O.

In some embodiments, the clay may include, but not limited to, one or more of kaolin, illite, chlorite, hectorite, bentonite, and montmorillonite. Preferably, the clay is clay with relatively high Al₂O₃ content, such as kaolin, illite, chlorite and the like.

In the embodiments of the present application, the clay with relatively high Al₂O₃ content is preferred, because each Al³⁺ has more positive charges and needs to be replaced by 3 H⁺ ions. Thus, when the content of Al₂O₃ in the clay is relatively high, the grafting density of acid radical molecules on the surface of clay increases, which is equivalent to increasing the thickness of the stabilized layer on the surface of latex particles of the binder. Therefore, at the same acidic pH value, clay with higher Al₂O₃ content has a better emulsifying effect on binder.

In some embodiments, before forming the clay/protonic acid emulsifying system in the embodiments of the present application, it is necessary to disperse the clay in water to form a clay dispersion.

In some embodiments, a mass percentage of clay in the clay dispersion is from 20% to 60%. Preferably, a mass percentage of clay in the clay dispersion is from 45% to 55%.

In some embodiments, the protonic acid comprises organic acid and/or inorganic acid.

In some embodiments, the organic acid comprises, but is not limited to, one or more of citric acid, malic acid, tartaric acid, acetic acid, malonic acid, succinic acid, oxalic acid, succinic acid and maleic acid.

In some embodiments, the inorganic acid comprises, but is not limited to, one or more of hydrochloric acid, boric acid and phosphoric acid.

In some embodiments, before forming the clay/protonic acid emulsifying system in the embodiments of the present application, it is necessary to dissolve the protonic acid in water to form an acidic solution.

In some embodiments, the mass percentage of protonic acid in the acidic solution is from 1% to 20%. Preferably, the mass percentage of protonic acid in the acidic solution is from 5% to 10%.

In the embodiments of the present application, by controlling the pH value in the clay/protonic acid emulsifying system within a certain range, the bind emulsion and bitumen emulsion can have more uniform and smaller average particle size, and higher solid content.

In some embodiments, the clay/protonic acid emulsifying system has a pH value of from 4 to 5, and preferably from 4 to 4.5.

In the embodiments of the present application, the emulsification mechanism of the protonic acid-modified clay is similar to that of the amphoteric emulsifier, so that the binder and bitumen can be emulsified in acidic and alkaline environments. When the clay acidic aqueous emulsion formed by mixing clay and protonic acid is mixed with hot binder, the binder is dispersed into small droplets under the action of mechanical force, and the acidic clay is adsorbed on the surface of the binder droplet to form a cationic emulsion. The latex particles in the binder emulsion are inaccessible and stable due to electrostatic repulsion, and the clay adsorbed on the surface of the latex particles of the binder has high mechanical strength, which makes it difficult for the latex particles to break and cohere after collision, thereby additionally improving the stability of the binder emulsion; the presence of clay increases the density of the binder phase. When the clay acidic aqueous emulsion formed by mixing clay and protonic acid is mixed with hot bitumen, the bitumen is dispersed into small droplets under the action of mechanical force, and the acidic clay is adsorbed on the surface of the bitumen droplet to form a cationic emulsion. The latex particles in the bitumen emulsion are inaccessible and stable due to electrostatic repulsion, and the clay adsorbed on the surface of the latex particles of the bitumen has high mechanical strength, which makes it difficult for the latex particles to break and cohere after collision, thereby additionally improving the stability of the bitumen emulsion; the presence of clay increases the density of the bitumen phase.

A second aspect of the embodiments of the present application provides a method for preparing a binder emulsion, comprising:

S22, mixing and dispersing a clay and a protonic acid evenly in water, to obtain a first mixture;

S24, mixing and stirring the first mixture and a binder at an elevated temperature to emulsify the binder and obtain the binder emulsion.

In some embodiments, the above step S22 may further comprise:

S220, dispersing the clay in water according to the formula to form a clay dispersion, and dispersing the protonic acid in water to form an acidic solution;

S222, mixing and stirring the clay dispersion, the acidic solution and water evenly, heating to 55-65°C, and dispersion stirring in a stirring tank; preferably, the speed of dispersion stirring is 1800 rad/min.

In some embodiments, the above step S24 may further comprise:

S240, heating the binder to a temperature of from 135 to 145°C, then slowly adding the binder into the stirring tank and simultaneously increasing the stirring speed;

S242, after adding the binder, continuing to stir until the binder emulsion is uniform.

In some embodiments, the adding speed of the binder in step S240 may be 100 g/min, and the stirring speed may be gradually increased to 3600 rad/min within 1 min.

In some embodiments, the stirring time in step S242 may be 3 minutes.

In some embodiments, the method for preparing a binder emulsion may also comprise the following steps:

S30, dispersing a clay in water according to the formula to form a clay dispersion, dispersing a protonic acid in water to form an acidic solution, and then heating a binder to a temperature of from 135 to 145°C;

S31, pumping the clay dispersion and 2/3 water into a reactor and circulating through a positive displacement pump;

S32, after adding 2/3 water, turning on a pump to add the acidic solution, continuing to add remaining 1/3 water, and turning on an emulsification pump;

S33, fully mixing the clay dispersion, the acidic solution and aqueous solution, and heating to a temperature of from 55 to 65°C;

S34, turning on a pump for feeding the binder with a feeding speed of from 50 to 70 kg/min, and keeping the temperature in a reactor below 90°C during the feeding;

S35, after the feeding is completed according to the amounts added in the formula, continuing to circulate for 5 minutes, followed by pumping the binder emulsion into a buffer tank;

S36, pumping the binder emulsion into a finished product tank after passing through a heat exchanger, and the temperature is lowered to below 40°C for later use.

For the binder emulsion prepared in embodiments of this application, due to the encapsulation of clay particles, in evaporation residue after evaporation of the binder emulsion, low softening point components in the binder can be absorbed in the lamellar structure of the clay and connected with high softening point components such as the polar binder to form a skeleton network structure, which can further increase the softening point of the evaporation residue by 10°C or higher and thus allow better pavement performance and longer service life of the pavement after maintenance.

A third aspect of the present application provides a fog seal mixture with sand, comprising:
100 parts by mass of the binder emulsion provided in the first aspect of the present application or prepared by the method provided in the second aspect of the present application; and from 5 to 70 parts by mass of an aggregate.

In the fog seal mixture with sand of embodiments of the present application, a large amount of aggregates are stably suspended. During the road construction process of the fog seal mixture with sand, the aggregates can be stably suspended without sedimentation, agglomeration and blockage in the spraying equipment, thereby enabling continuous large-scale mechanized spraying.

In some embodiments, the aggregate comprises one or more of quartz sand, corundum sand, carborundum sand and water washed sand.

In some embodiments, the fog seal mixture with sand further comprises: from 0 to 20 parts by mass of auxiliary powder; from 0 to 20 parts by mass of pigment; and from 0 to 50 parts by mass of latex additive.

Preferably, the amount of latex additive in the fog seal mixture with sand is from 5 to 20 parts by mass.

Preferably, the amount of auxiliary powder in the fog seal mixture with sand is from 5 to 20 parts by mass.

Preferably, the amount of pigment in the fog seal mixture with sand is from 3 to 20 parts by mass.

In some embodiments, the type of pigment is not particularly limited, and can be determined according to actual needs. For example, toner, color slurry, color paste, and the like may be used.

In some embodiments, the type of auxiliary powder is not particularly limited, and can be determined according to actual needs. For example, titanium dioxide powder, kaolin, heavy calcium, talc powder, and microsilica may be used.

Preferably, the auxiliary powder has a particle size of from 400 to 1000 mesh. In the embodiment of this application, the auxiliary powder mainly takes the function of covering the construction work plane.

In some embodiments, the type of latex additive is not particularly limited, and can be determined according to actual needs. Latex additives known in the art may be used, such as acrylic latex, one-component waterborne epoxy resin, two-component waterborne epoxy resin, one-component waterborne polyurethane, two-component waterborne polyurethane and styrene-butadiene copolymer latex, and the like.

In the embodiments of the present application, the addition of the latex additive can improve the pavement performance of the mixture, and at the same time, it will not adversely affect the suspension of the aggregates in the binder emulsion and will not cause sedimentation.

In some embodiments, the method for preparing a fog seal mixture with sand may comprise:

S40, preparing raw materials according to the formula;

S42, adding a binder emulsion to a tank, and starting stirring for 10 minutes;

S44, slowly adding an aggregate according to the formula, and stirring for 10 minutes;

S46, adding a latex additive, titanium dioxide powder and a pigment at a temperature of 50°C or lower, and stirring for 10 minutes to obtain a fog seal mixture with sand.

The fog seal mixture with sand in embodiments of the present application can be uniformly applied to the bitumen pavement in a large area, because no agglomeration and sedimentation will occur. The applying speed can reach the maximum speed of conventional spraying operations, i.e. from 5 to 10 km/h, the applying width can exceed 6 m, and the construction efficiency can reach up to 16.7 m²/s.

A fourth aspect of the present application provides a modified fog seal mixture with sand, comprising:

100 parts by mass of the fog seal mixture with sand provided in the third aspect of the present application; and from 0 to 20 parts by mass of an emulsion rejuvenating agent.

In some embodiments, the amount of the emulsion rejuvenating agent in the fog seal mixture with sand is from 5 to 10 parts by mass.

In some embodiments, the emulsion rejuvenating agent comprises a mixture of scleroglucah and cationic emulsifier.

In the modified fog seal mixture with sand provided in embodiments of this application, use of the emulsion rejuvenating agent can lead to the demulsification and encapsulation of the bio-based rejuvenating agent on the aged binder first, and then the encapsulation of binder emulsion on the rejuvenating agent to ensure full contact of the rejuvenating agent and the aged binder to activate and restore the aged binder. Therefore, the modified fog seal mixture with sand which is modified by using the emulsion rejuvenating agent can improve the self-repairing performance and flexibility of the pavement, thereby suppressing cracks and threshing phenomena caused by aging.

A sixth aspect of the present application provides a method for preparing a bitumen emulsion, comprising:

S62, mixing and dispersing a clay and a protonic acid evenly in water to obtain a first mixture;

S64, mixing and stirring the first mixture and a bitumen at an elevated temperature to emulsify the bitumen and obtain the bitumen emulsion.

In some embodiments, the above step S62 may further comprise:

S620, dispersing the clay in water according to the formula to form a clay dispersion, and dispersing the protonic acid in water to form an acidic solution;

S622, mixing and stirring the clay dispersion, the acidic solution and water evenly, heating to 55-65°C, and dispersion stirring in a stirring tank; preferably, the speed of dispersion stirring is 1800 rad/min.

In some embodiments, the above step S64 may further comprise:

S640, heating the bitumen to a temperature of from 135 to 145°C, then slowly adding the bitumen into the stirring tank and simultaneously increasing the stirring speed;

S642, after adding the bitumen, continuing to stir until the bitumen emulsion is uniform.

In some embodiments, the adding speed of the bitumen in step S640 may be 100 g/min, and the stirring speed may be gradually increased to 3600 rad/min within 1 min.

In some embodiments, the stirring time in step S642 may be 3 minutes.

In some embodiments, the method for preparing a bitumen emulsion may also comprise the following steps:

S70, dispersing a clay in water according to the formula to form a clay dispersion, dispersing a protonic acid in water to form an acidic solution, and then heating a bitumen to a temperature of from 135 to 145°C;

S71, pumping the clay dispersion and 2/3 water into a reactor and circulating through a positive displacement pump;

S72, after adding 2/3 water, turning on a pump to add the acidic solution, continuing to add remaining 1/3 water, and turning on an emulsification pump;

S73, fully mixing the clay dispersion, the acidic solution and aqueous solution, and heating to a temperature of from 55 to 65°C;

S74, turning on a pump for feeding the bitumen with a feeding speed of from 50 to 70 kg/min, and keeping the temperature in a reactor below 90°C during the feeding;

S75, after the feeding is completed according to the amounts added in the formula, continuing to circulate for 5 minutes, followed by pumping the bitumen emulsion into a buffer tank;

S76, pumping the bitumen emulsion into a finished product tank after passing through a heat exchanger, and the temperature is lowered to below 40°C for later use.

For the bitumen emulsion prepared in embodiments of this application, due to the encapsulation of clay particles, in evaporation residue after evaporation of the bitumen emulsion, low softening point components in the bitumen can be absorbed in the lamellar structure of the clay and connected with high softening point components such as the polar bitumen to form a skeleton network structure, which can further increase the softening point of the evaporation residue by 10°C or higher and thus allow better pavement performance and longer service life of the pavement after maintenance.

A seventh aspect of the present application provides a bitumen mixture, comprising:
100 parts by mass of the bitumen emulsion provided in the fifth aspect of the present application; and from 10 to 70 parts by mass of an aggregate.

In the bitumen mixture of embodiments of the present application, a large amount of aggregates are stably suspended. During the road construction process of the bitumen mixture, the aggregates can be stably suspended without sedimentation, agglomeration and blockage in the spraying equipment, thereby enabling continuous large-scale mechanized spraying.

In some embodiments, the aggregate comprises one or more of quartz sand, corundum sand, carborundum sand and water washed sand.

In some embodiments, the bitumen mixture further comprises: from 0 to 20 parts by mass of latex additive. Preferably, the amount of latex additive in the bitumen mixture is from 5 to 20 parts by mass.

In some embodiments, the type of latex additive is not particularly limited, and can be determined according to actual needs. Latex additives known in the art may be used, such as acrylic latex, one-component waterborne epoxy resin, two-component waterborne epoxy resin, one-component waterborne polyurethane, two-component waterborne polyurethane and styrene-butadiene copolymer latex, and the like.

In the embodiments of the present application, the addition of the latex additive can improve the pavement performance of the mixture, and at the same time, it will not adversely affect the suspension of the aggregates in the bitumen emulsion and will not cause sedimentation.

In some embodiments, the method for preparing a bitumen mixture may comprise:

S80, preparing raw materials according to the formula;

S82, adding a bitumen emulsion to a tank, and starting stirring for 10 minutes;

S84, slowly adding an aggregate according to the formula, and stirring for 10 minutes;

S86, adding a latex additive at a temperature of 50°C or lower, and stirring for 10 minutes to obtain a bitumen mixture.

The bitumen mixture in embodiments of the present application can be uniformly applied to the bitumen pavement in a large area, because no agglomeration and sedimentation will occur. The applying speed can reach the maximum speed of conventional spraying operations, i.e. from 5 to 10 km/h, the applying width can exceed 6 m, and the construction efficiency can reach up to 16.7 m²/s.

An eighth aspect of the present application provides a modified bitumen mixture, comprising:
100 parts by mass of the bitumen mixture provided in the seventh aspect of the present application; and from 0 to 10 parts by mass of an emulsion rejuvenating agent.

In some embodiments, the amount of the emulsion rejuvenating agent in the bitumen mixture is from 5 to 10 parts by mass.

In some embodiments, the emulsion rejuvenating agent comprises a mixture of scleroglucah and cationic emulsifier.

In the modified bitumen mixture provided in embodiments of this application, use of the emulsion rejuvenating agent can lead to the demulsification and encapsulation of the bio-based rejuvenating agent on the aged bitumen first, and then the encapsulation of bitumen emulsion on the rejuvenating agent to ensure full contact of the rejuvenating agent and the aged bitumen to activate and restore the aged bitumen. Therefore, the modified bitumen mixture which is modified by using the emulsion rejuvenating agent can improve the self-repairing performance and flexibility of the pavement, thereby suppressing cracks and threshing phenomena caused by aging.

A ninth aspect of the present application provides a mixture system, comprising:
the fog seal mixture with sand provided in the third aspect of the present application, the modified fog seal mixture with sand provided in the fourth aspect of the present application, the bitumen mixture provided in the seventh aspect of the present application, or the modified bitumen mixture provided in the eighth aspect of the present application; and a solution used to adjust the viscosity of the mixture system.

In some embodiments, the solution comprises an acidic solution and/or an alkaline solution. The acidic solution may have a pH value of from 1 to 3. In some embodiments, the alkaline solution has a pH value of from 10 to 12.

In the mixture system in embodiments of this application, without changing the solid content of the system or introducing other thickening additives, the viscosity of the mixture system can be adjusted only by adding an acidic solution or an alkaline solution to change the pH value of the system. Compared with the traditional method of changing the solid content of the system or introducing thickening additives or viscosity-reducing additives, the operation in the present application is simpler and more efficient.

As a specific example, for the spraying construction of the mixture, by adding citric acid solution during transportation, the pH value of the system can be adjusted to 6 and the Stormer viscosity can be increased to 140 KU, to ensure the stability of the mixture during transportation. After arriving at the construction site, by adding potassium hydroxide solution according to the conditions of the construction equipment, the pH value of the system can be adjusted to 6.5-8 and the Stormer viscosity can be reduced to 80 KU, to ensure the smooth progress of the spraying operation while maintaining the homogeneity of the mixture.

In the mixture system of embodiments of the present application, the initial size of the latex particles of binder or the latex particles of bitumen is determined when the binder emulsion is prepared, and then the aggregation state of the latex particles of binder or the latex particles of bitumen is changed by adjusting the pH value. When the pH increases, the positive charge on the surface of the latex particles of binder or the latex particles of bitumen decreases, and the latex particles partially flocculate into larger particles, so the viscosity decreases (in the emulsion with a constant solid content, the smaller the particle size, the higher the viscosity).

A tenth aspect of the present application provides a pavement structure, comprising one or more of the fog seal mixture with sand provided in the third aspect of the present application, the modified fog seal mixture with sand provided in the fourth aspect of the present application, the bitumen mixture provided in the seventh aspect of the present application, the modified bitumen mixture provided in the eighth aspect of the present application and the mixture system provided in the ninth aspect of the present application.

### Examples

The following examples are intended to describe the present application more specifically, merely for the purpose of illustration. Various modifications and variations within the scope of the present application are apparent to those skilled in the related art. Unless otherwise stated, all parts, percentages, and ratios described in the following embodiments are based on weight, and all reagents used in the embodiments are commercially available or synthesized according to conventional methods and can be directly used without further treatment, and all instruments used in the embodiments are commercially available.

### Example 1

### Preparation of binder emulsion

The binder emulsion included: 17.5% by mass of clay dispersion, 0.75% by mass of citric acid solution, 24.25% by mass of water, and 57.5% by mass of binder.

The binder included: 53.5% by mass of heavy oil, 46.3% by mass of C9 petroleum resin (Novares T140), and 0.2% by mass of adhesion promoter (REDICOTE E-85, oleamidopropyl dimethylamine (CAS: 109-28-4)).

Kaolin was used as the clay in the clay dispersion, and the mass percentages of clay and water were: 41% clay and 59% water, respectively. The mass percentages of citric acid and water in the citric acid solution were: 9% citric acid and 91% water, respectively.

Water, the clay dispersion and the citric acid solution were mixed and heated to a temperature of from 55 to 65°C, and placed in a stirring tank. Then the high dispersion mixer was turned on at 1800 rad/min. The binder was heated to a temperature of from 135 to 145°C, then slowly added into the stirring tank (100 g/min) and simultaneously the stirring rate was gradually increased to 3600 rad/min (within 1 min). After all of materials of the binder were added, stirring was continued for 3 mins until the binder emulsion was uniform, and the binder emulsion was obtained.

### Preparation of fog seal mixture with sand

The fog seal mixture with sand included: the binder emulsion prepared above, quartz sand (40-80 mesh), titanium dioxide powder (400 mesh) and pigment, at a mass ratio of 100:40:5:3.

Raw materials at ratios according to the formula were prepared. The binder emulsion was added into a tank. Stirring for 10 minutes started. Quartz sand according to the formula was slowly added, followed by stirring for 10 minutes. Titanium dioxide powder and pigment were added at ratios according to the formula, followed by stirring for 10 minutes. Attention was paid to mixing temperature during feeding and stirring of materials that should not exceed 50°C. Finally, the fog seal mixture with sand was obtained.

### Example 2

The preparation process of the binder emulsion and the preparation process of the fog seal mixture with sand were the same as in Example 1, except that SBR latex was added to the fog seal mixture with sand, wherein the mass ratio of the binder emulsion to the SBR latex was 100:5.

### Example 3

The preparation process of the binder emulsion and the preparation process of the fog seal mixture with sand were the same as in Example 1, except that in the preparation of the binder emulsion, the binder was replaced by a modified binder.

### Preparation of the modified binder

The modified binder included: 54.85% by mass of heavy oil, 42.03% by mass of C9 petroleum resin (Novares T140), 2.95% by mass of ethylene vinyl acetate copolymer (Escorene UL04533EH2), 0.2% by mass of adhesion promoter (REDICOTE E-85, oleamidopropyl dimethylamine (CAS: 109-28-4)).

The heavy oil was heated to a temperature of from 140°C to 145°C. A high dispersion mixer was used at 1000 rad/min, with stirring for 10 minutes. EVA and C9 petroleum resin according to the formula were slowly added. The temperature was kept at 140°C-145°C. A high dispersion mixer was used at 1000 rad/min, with stirring for 1 hour. The adhesion promoter according to the formula was added followed by stirring for 15 minutes to obtain the modified binder.

### Example 4

The preparation process of the binder emulsion and the preparation process of the fog seal mixture with sand were the same as in Example 1, except that (1) in the preparation of the binder emulsion, the binder was replaced by a modified binder; and (2) SBR latex was added to the fog seal mixture with sand, wherein the mass ratio of the binder emulsion to the SBR latex was 100:5.

### Example 5

The preparation process of the binder emulsion and the preparation process of the fog seal mixture with sand were the same as in Example 4, except that in the binder emulsion, the citric acid in the citric acid solution was replaced by tartaric acid with the same mass percentage.

### Example 6

The preparation process of the binder emulsion and the preparation process of the fog seal mixture with sand were the same as in Example 4, except that in the binder emulsion, the citric acid in the citric acid solution was replaced by hydrochloric acid with the same mass percentage.

### Example 7

The preparation process of the binder emulsion and the preparation process of the fog seal mixture with sand were the same as in Example 4, except that 2.2 g of citric acid solution was added to the fog seal mixture with sand, wherein the mass percentage of citric acid in the citric acid solution was 7.25%.

### Example 8

The preparation process of the binder emulsion and the preparation process of the fog seal mixture with sand were the same as in Example 4, except that 12.2 g of NaOH solution was added to the fog seal mixture with sand, wherein the mass percentage of NaOH in the NaOH solution was 10%.

### Example 9

The preparation process of the binder emulsion and the preparation process of the fog seal mixture with sand were the same as in Example 4, except that 12.2 g of water was added to the fog seal mixture with sand.

### Example 10

The preparation process of the binder emulsion and the preparation process of the fog seal mixture with sand were the same as in Example 4, except that 12.2 g of NaOH solution and 2.2g of thickener were added to the fog seal mixture with sand, wherein the mass percentage of NaOH in the NaOH solution was 10%.

### Example 11

The preparation process of the binder emulsion and the preparation process of the fog seal mixture with sand were the same as in Example 4, except that 60 g of water was added to the fog seal mixture with sand.

### Example 12

### Preparation of binder emulsion

The bitumen emulsion included: 17.5% by mass of clay dispersion, 0.75% by mass of citric acid solution, 24.25% by mass of water, and 57.5% by mass of 70# bitumen.

Kaolin was used as the clay in the clay dispersion, and the mass percentages of clay and water were: 41% clay and 59% water, respectively. The mass percentages of citric acid and water in the citric acid solution were: 9% citric acid and 91% water, respectively.

Water, the clay dispersion and the citric acid solution were mixed and heated to a temperature of from 55 to 65°C, and placed in a stirring tank. Then the high dispersion mixer was turned on at 1800 rad/min. The 70# bitumen was heated to a temperature of from 135 to 145°C, then slowly added into the stirring tank (100 g/min) and simultaneously the stirring rate was gradually increased to 3600 rad/min (within 1 min). After all of 70# bitumen was added, stirring was continued for 3 mins until the bitumen emulsion was uniform, and the bitumen emulsion was obtained.

### Preparation of bitumen mixture

The bitumen mixture included: the bitumen emulsion prepared above and quartz sand (40-80 mesh), at a mass ratio of 100:40.

Raw materials at ratios according to the formula were prepared. The bitumen emulsion was added into a tank. Stirring for 10 minutes started. Quartz sand according to the formula was slowly added, followed by stirring for 10 minutes. Attention was paid to mixing temperature during feeding and stirring of materials that should not exceed 50°C. Finally, the bitumen mixture was obtained.

### Example 13

The preparation process of the bitumen emulsion and the preparation process of the bitumen mixture were the same as in Example 12, except that SBR latex was added to the bitumen mixture, wherein the mass ratio of the bitumen emulsion, quartz sand (40-80 mesh) and the SBR latex was 100:40:5.

### Example 14

The preparation process of the bitumen emulsion and the preparation process of the bitumen mixture were the same as in Example 12, except that (1) in the preparation of the bitumen emulsion, 70# bitumen was replaced by a first modified bitumen; and (2) SBR latex was added to the bitumen mixture, wherein the mass ratio of the bitumen emulsion, quartz sand (40-80 mesh) and the SBR latex was 100:40:5.

### Preparation of the first modified bitumen

The first modified bitumen included: 3% by mass of EVA (Escorene UL04533EH2), 10% by mass of petroleum resin (Novares T140M), 0.3% by mass of adhesion promoter (REDICOTE E-85, oleamidopropyl dimethylamine (CAS: 109-28-4)), and 86.7% by mass of base bitumen (with a needle penetration of 70).

The base bitumen was heated to a temperature of from 160°C to 165°C. A high dispersion mixer was used at 1000 rad/min, with stirring for 10 minutes. EVA and petroleum resin according to the formula were slowly added. The temperature was kept at 160°C-165°C. A high dispersion mixer was used at 1000 rad/min, with stirring for 1 hour. The adhesion promoter according to the formula was added followed by stirring for 15 minutes to obtain the first modified bitumen with a needle penetration of <40 and softening point of > 60°C.

### Example 15

The preparation process of the bitumen emulsion and the preparation process of the bitumen mixture were the same as in Example 12, except that in the preparation of the bitumen emulsion, 70# bitumen was replaced by a second modified bitumen.

### Preparation of the second modified bitumen

The second modified bitumen included: 30% by mass of anti-rutting masterbatch (available from Luoyang Petrochemical), 0.3% by mass of adhesion promoter (REDICOTE E-85, oleamidopropyl dimethylamine (CAS: 109-28-4)), and 69.7% by mass of base bitumen (with a needle penetration of 70).

The base bitumen was heated to a temperature of from 155°C to 160°C. A high dispersion mixer was used at 1000 rad/min, with stirring for 10 minutes. Anti-rutting masterbatch according to the formula was slowly added. The temperature was kept at 150°C-155°C. A high dispersion mixer was used at 1000 rad/min, with stirring for 1 hour. The adhesion promoter according to the formula was added followed by stirring for 15 minutes to obtain the second modified bitumen with a needle penetration of <25 and softening point of > 60°C.

### Example 16

The preparation process of the bitumen emulsion and the preparation process of the bitumen mixture were the same as in Example 12, except that (1) in the preparation of the bitumen emulsion, 70# bitumen was replaced by the second modified bitumen; and (2) SBR latex was added to the bitumen mixture, wherein the mass ratio of the bitumen emulsion, quartz sand (40-80 mesh) and the SBR latex was 100:40:5.

### Example 17

The preparation process of the bitumen emulsion and the preparation process of the bitumen mixture were the same as in Example 16, except that in the bitumen emulsion, the citric acid in the citric acid solution was replaced by tartaric acid with the same mass percentage.

### Example 18

The preparation process of the bitumen emulsion and the preparation process of the bitumen mixture were the same as in Example 16, except that in the bitumen emulsion, the citric acid in the citric acid solution was replaced by hydrochloric acid with the same mass percentage.

### Example 19

The preparation process of the bitumen emulsion and the preparation process of the bitumen mixture were the same as in Example 16, except that 2.2 g of citric acid solution was added to the bitumen mixture, wherein the mass percentage of citric acid in the citric acid solution was 7.25%.

### Example 20

The preparation process of the bitumen emulsion and the preparation process of the bitumen mixture were the same as in Example 16, except that 12.2 g of NaOH solution was added to the bitumen mixture, wherein the mass percentage of NaOH in the NaOH solution was 10%.

### Example 21

The preparation process of the bitumen emulsion and the preparation process of the bitumen mixture were the same as in Example 16, except that 12.2 g of water was added to the bitumen mixture.

### Example 22

The preparation process of the bitumen emulsion and the preparation process of the bitumen mixture were the same as in Example 16, except that 12.2 g of NaOH solution and 2.2g of thickener were added to the bitumen mixture, wherein the mass percentage of NaOH in the NaOH solution was 10%.

### Example 23

The preparation process of the bitumen emulsion and the preparation process of the bitumen mixture were the same as in Example 16, except that 60 g of water was added to the bitumen mixture.

### Comparative Example 1

The preparation process of the binder emulsion and the preparation process of the fog seal mixture with sand were the same as in Example 4, except that in Comparative Example 1, a conventional anionic bitumen emulsifier fatty acid amidoalkyl betaine (TEGO^{®} Addibit EK 50) was used to replace the clay/citric acid emulsifying system in Example 4.

The binder emulsion in Comparative Example 1 included: 600g of a modified binder; 10 g of a conventional anionic bitumen emulsifier (TEGO^{®} Addibit EK 50), 1 g of 10% by mass NaOH solution, 389 g of water, and 50 g of polyamide wax thickener.

### Comparative Example 2

The preparation process of the bitumen emulsion and the preparation process of the bitumen mixture were the same as in Example 16, except that in Comparative Example 2, a conventional anionic bitumen emulsifier fatty acid amidoalkyl betaine (TEGO^{®} Addibit EK 50) was used to replace the clay/citric acid emulsifying system in Example 5.

The bitumen emulsion in Comparative Example 2 included: 600g of a second modified bitumen; 10 g of a conventional anionic bitumen emulsifier (TEGO^{®} Addibit EK 50), 1 g of 10% by mass NaOH solution, 389 g of water, and 50 g of polyamide wax thickener.

### Comparative Example 3

Comparative Example 3 was the bitumen emulsion of commercially available competitive product 1, and the emulsifier used in the bitumen emulsion was clay/sodium stearate emulsifier.

### Comparative Example 4

Comparative Example 4 was the bitumen emulsion of commercially available competitive product 2, and the emulsifier used in the bitumen emulsion was a clay-type bitumen emulsion containing a volatile organic solvent.

### Test section

Relevant physical and mechanical performance tests were carried out on the binder emulsion and the fog seal mixture with sand in the above-mentioned Examples 1-11 (Ex. 1- Ex. 11) and Comparative Example 1 (CE1). The test results were shown in Table 1 and Table 2 below.

**Table 1**

| Item | Binder emulsion | | | | | | |
|---|---|---|---|---|---|---|---|
| | Emulsifying system | Binder | SBR latex | pH | Stormer viscosity (KU) | Solid content (%) | Softening point of evaporation residue (°C) |
| Ex. 1 | Kaolin/citric acid | Binder | Not added | 5.23 | 122.8 | 62.02 | 53.1 |
| Ex. 2 | | | Added | 5.78 | 148 | 61.95 | 67.8 |
| Ex. 3 | | Modified binder | Not added | 6.24 | 125.6 | 61.93 | 60.4 |
| Ex. 4 | | | Added | 6.83 | 143 | 61.65 | 73.4 |
| Ex. 5 | Kaolin/tartaric acid | | | 6.61 | 126.4 | 62.013 | 74.3 |
| Ex. 6 | Kaolin/hydrochloric acid | | | 6.74 | 123.4 | 61.93 | 73.2 |
| Ex. 7 | Kaolin/citric acid | | | 6.72 | 124.3 | 62.15 | 74.7 |
| Ex. 8 | | | | | | | |
| Ex. 9 | | | | | | | |
| Ex. 10 | | | | | | | |
| Ex. 11 | | | | | | | |
| CE1 | Conventional anionic bitumen emulsifier | Binder | Added | 11.45 | 120.1 | 57.73 | 62.9 |

**Table 2**

| Item | Fog seal mixture with sand | | | | | | | | | | | |
|---|---|---|---|---|---|---|---|---|---|---|---|---|
| | Additional acid/alkali solution | pH | Stormer viscosity (KU) | Solid content (%) | Sand content (%) | 24h stability of suspended sand (filtered by 400 mesh filter) | Construction performance | non-stick tire time (min) | Adhesion (grade) | Scrub resistant (rubber tube/time) | Surface dry time (min) | Hard dry time (min) |
| Ex. 1 | Not added | 6.812 | 122.4 | 72.56 | 28.25 | Condensation of water on surface, 0.5mm, No sand sedimentation. | Stable storage of materials in equipment tank for at least 12hs without sand settlement; continuous spraying with large mechanized equipment for at least 1 km without nozzle blockage; no blockage caused by sedimentation and agglomeration at equipment filter screen and nozzles; No sedimentation of lots of sand during cleaning of equipment | 60 | 1 | 300 (complete failure) | 50 | 70 |
| Ex. 2 | | 6.423 | 121.9 | 72.43 | 28.10 | | | 60 | 1 | >2000 | 55 | 80 |
| Ex. 3 | | 6.23 | 124.3 | 73.10 | 28.39 | | | 60 | | >1000 | 30 | 60 |
| Ex. 4 | | 6.562 | 117.1 | 72.32 | 28.12 | | | 60 | | >2000 | 50 | 60 |
| Ex. 5 | | 6.78 | 114.4 | 72.24 | 28.32 | | | 60 | | | 30 | 60 |
| Ex. 6 | | 7.01 | 114.3 | 73.41 | 28.51 | | | 60 | | | 30 | 60 |
| Ex. 7 | Citric acid solution | 5.11 | >150 | 70.12 | 28.11 | Condensation of water on surface, 0.5mm, No sand sedimentation | | | | | | |
| Ex. 8 | NaOH solution | 9.43 | 52.9 | 68.29 | 27.56 | Condensation of water on surface, 20.0 mm, complete sand sedimentation | | | | | | |
| Ex. 9 | Water | 7.45 | 101.0 | 68.28 | 27.48 | Condensation of water on surface, 0.5mm, No sand sedimentation | | | | | | |
| Ex. 10 | NaOH solution and thickener | 9.36 | 96.9 | 68.69 | 27.05 | Condensation of water on surface, 3.0 mm, slight sand sedimentation | | | | | | |
| Ex. 11 | Water | 7.46 | 52.7 | 63.32 | 19.87 | Condensation of water on surface, 7.0 mm, No sand sedimentation | | | | | | |
| CE1 | Not added | 9.65 | 115.3 | 70.47 | 26.56 | Condensation of water on surface, 5.0 mm, slight sand sedimentation | Poor stability of materials in equipment tank and requiring continuous stirring; | 85 | 1 | >1000 | 50 | 135 |
| | | | | | | | sedimentation of lots of sand on filter screen and nozzle of equipment during construction, causing blockage and not allowing continuous spraying; | | | | | |
| | | | | | | | Difficult to clean equipment due to sand accumulation | | | | | |

### Test methods

(1) Needle penetration: Test for needle penetration was carried out in accordance with T0604-2011 Test for needle penetration of binder in JTG E20-2011 "Standard Test Methods of Bitumen and Bituminous Mixtures for Highway Engineering".
(2) Acid value: Test for acid value was carried out in accordance with T0626-2000 Test for acid value of binder in JTG E20-2011 "Standard Test Methods of Bitumen and Bituminous Mixtures for Highway Engineering".
(3) pH: was tested according to the standard HJ 1147-2020.
(4) Solid content: was tested according to the standard JTG E20 T0651.
(5) Stormer viscosity: was tested according to the standard GB 9269-88.
(6) Softening point of evaporation residue: was tested according to the standard JTG E20 T0606.
(7) Sand content: was tested according to the standard GB/14684.
(8) 24h stability of suspended sand: was test according to the standard JTG E20 T0655.
(9) Adhesion: was tested according to the standard GB/T 9286.
(10) Scrub resistance: was tested according to the standard GB/T 9266-2009.
(11) Non-stick tire time: was tested according to the standard JT/T 280.
(12) Surface drying time and hard drying time: were tested according to the standard GB/T 16777-2008.
(13) Kinematic viscosity: was tested according to the standard GB/T 265-1988.
(14) Softening point: was tested according to the standard GB/T 4507-2014.

From comparison and analysis of Examples 1-6 and Comparative Example 1, it was shown that the solid content of the binder emulsion was greatly improved by using the clay/protonic acid emulsifying system of the present application; compared with Comparative Example 1, the solid content, sand content and 24h stability of the fog seal mixture with sand in Examples 1-6 were significantly higher than those in Comparative Example 1. It can be seen that by emulsifying with the clay/protonic acid emulsifying system in this application, the ability of the binder emulsion to suspend aggregates is greatly improved. In addition, the fog seal mixture with sand of the present application can be stored stably for at least 12 hours in the equipment tank without sand settlement; can be continuous sprayed with large mechanized equipment for at least 1km without nozzle blockage; has no blockage caused by sedimentation and agglomeration at equipment filter screen and nozzles; has no sand precipitation on filter screen at the bottom of the tank after the completion of construction; thus, allows continuous large-scale mechanized spraying construction.

From comparison and analysis of Examples 7-11 and Comparative Example 1, it was shown that the viscosity of the mixture system can be adjusted by adding an acidic or alkaline solution to the fog seal mixture with sand.

Relevant physical and mechanical performance tests were carried out on the bitumen emulsion and the bitumen mixture in the above-mentioned Examples 12-23 (Ex. 12- Ex. 23) and Comparative Example 1 (CE2-CE4). The test results were shown in Table 3 and Table 3 below.

**Table 3**

| Item | Bitumen emulsion | | | | | | |
|---|---|---|---|---|---|---|---|
| | Emulsifying system | Bitumen | SBR latex | pH | Stormer viscosity (KU) | Solid content (%) | Softening point of evaporation residue (°C) |
| Ex. 12 | Clay/citric acid | 70# bitumen | Not added | 5.12 | 121.7 | 61.82 | 52.1 |
| Ex. 13 | | | Added | 5.28 | 106.3 | 61.78 | 55.1 |
| Ex. 14 | | First modified bitumen | Added | 6.53 | 127.7 | 62.33 | 59.3 |
| Ex. 15 | | Second modified bitumen | Not added | 6.67 | 135.9 | 61.55 | 70.2 |
| Ex. 16 | | | Added | 6.81 | 127.3 | 61.43 | 75.3 |
| Ex. 17 | Clay/tartaric acid | | | 6.84 | 113.4 | 62.52 | 75.2 |
| Ex. 18 | Clay/hydrochloric acid | | | 6.76 | 117.2 | 64.87 | 74.9 |
| Ex. 19 | Clay/tartaric acid | | | 6.81 | 127.3 | 61.55 | 75.3 |
| Ex. 20 | | | | | | | |
| Ex. 21 | | | | | | | |
| Ex. 22 | | | | | | | |
| Ex. 23 | | | | | | | |
| CE2 | Conventional anionic bitumen emulsifier | Second modified bitumen | Added | 11.45 | 123.1 | 58.73 | 63.5 |
| CE3 | Clay/Sodium Stearate | 30# bitumen | Unknown | 8.78 | 53.1 | 45.93 | - |
| CE4 | Clay-type bitumen emulsion containing a volatile organic solvent | 30# bitumen | Unknown | 7.81 | 52.3 | 48.56 | - |

**Table 4**

| Item | Bitumen mixture | | | | | | | | | | | |
|---|---|---|---|---|---|---|---|---|---|---|---|---|
| | Additional acid/alkali solution | pH | Stormer viscosity (KU) | Solid content (%) | Sand content (%) | 24h stability of suspended sand (filtered by 400 mesh filter) | Construction performance | non-stick tire time (min) | Adhesion (grade) | Scrub resistant (rubber tube/time) | Surface dry time (min) | Hard dry time (min) |
| Ex. 12 | Not added | 6.92 | 123.2 | 72.73 | 28.44 | Condensation of water on surface, 0.5mm, No sand sedimentation | Stable storage of materials in equipment tank for at least 12hs without sand settlement; continuous spraying with large mechanized equipment for at least 1 km without nozzle blockage; no blockage caused by sedimentation and agglomeration at equipment filter screen and nozzles; No sedimentation of | 60 | 1 | 300 (complete failure) | 50 | 70 |
| Ex. 13 | | 6.98 | 104.1 | 71.94 | 28.39 | | | 60 | 0 | 500 (complete failure) | 60 | 80 |
| Ex. 14 | | 6.85 | 125.4 | 73.09 | 28.38 | | | 60 | | >1000 | 30 | 60 |
| Ex. 15 | | 6.62 | 135.3 | 72.53 | 28.46 | | | 60 | | >1000 | 30 | 60 |
| Ex. 16 | | 6.89 | 115.3 | 72.30 | 28.43 | | | 60 | | >2000 | 30 | 60 |
| Ex. 17 | | 7.03 | 113.2 | 73.34 | 28.42 | | | 60 | | | 30 | 60 |
| Ex. 18 | | 6.94 | 116.3 | 75.23 | 29.08 | | lots of sand during cleaning of equipment | 55 | | | 25 | 50 |
| Ex. 19 | Citric acid solution | 5.02 | >150 | 70.01 | 28.07 | Condensation of water on surface, 0.5mm, No sand sedimentation | | - | | | - | - |
| Ex. 20 | NaOH solution | 9.55 | 53.5 | 68.31 | 27.67 | Condensation of water on surface, 20.0 mm, complete sand sedimentation | | | | | | |
| Ex. 21 | Water | 7.52 | 100.7 | 68.32 | 27.52 | Condensation of water on surface, 0.5mm, No sand sedimentation | - | | | | | |
| Ex. 22 | NaOH solution and thickener | 9.42 | 97.8 | 68.74 | 27.14 | Condensation of water on surface, 3.0 mm, slight sand sedimentation | | | | | | |
| Ex. 23 | Water | 7.54 | 53.2 | 63.46 | 19.96 | Condensation of water on surface, 7.0 mm, No sand sedimentation | | | | | | |
| CE2 | Not added | 9.48 | 116.4 | 70.50 | 26.59 | Condensation of water on surface, 5.0 mm, slight sand sedimentation | Poor stability of materials in equipment tank and requiring continuous stirring; sedimentation of lots of sand on filter screen and nozzle of equipment during construction, causing blockage and not allowing continuous spraying; Difficult to clean equipment due to sand accumulation | 85 | 1 | >1000 | 50 | 135 |
| CE3 | | 8.61 | 88.2 | 57.51 | 23.6 | Condensation of water on surface, 6.0 mm, complete sand sedimentation | | 75 | 4 | 1000 (complete failure) | 60 | 120 |
| CE4 | | 8.34 | 54.3 | 56.48 | 16.1 | Condensation of water on surface, 7.0 mm, complete sand sedimentation | | 45 | 1 | 1000 (whitening) | 25 | 120 |

### Test methods

(1) Needle penetration of bitumen: Test for needle penetration of bitumen was carried out in accordance with T0604-2011 Test for needle penetration of bitumen in JTG E20-2011 "Standard Test Methods of Bitumen and Bituminous Mixtures for Highway Engineering".
(2) Acid value: Test for acid value was carried out in accordance with T0626-2000 Test for acid value of bitumen in JTG E20-2011 "Standard Test Methods of Bitumen and Bituminous Mixtures for Highway Engineering".
(3) pH: was tested according to the standard HJ 1147-2020.
(4) Solid content: was tested according to the standard JTG E20 T0651.
(5) Stormer viscosity: was tested according to the standard GB 9269-88.
(6) Softening point of evaporation residue: was tested according to the standard JTG E20 T0606.
(7) Sand content: was tested according to the standard GB/14684.
(8) 24h stability of suspended sand: was test according to the standard JTG E20 T0655.
(9) Adhesion: was tested according to the standard GB/T 9286.
(10) Scrub resistance: was tested according to the standard GB/T 9266-2009.
(11) Non-stick tire time: was tested according to the standard JT/T 280.
(12) Surface drying time and hard drying time: were tested according to the standard GB/T 16777-2008.

From comparison and analysis of Examples 12-18 and Comparative Examples 2-4, it was shown that the solid content of the bitumen emulsion was greatly improved by using the clay/protonic acid emulsifying system of the present application; compared with Comparative Examples 2-4, the solid content, sand content and 24h stability of the bitumen mixture with sand in Examples 12-18 were significantly higher than those in Comparative Examples 2-4. It can be seen that by emulsifying with the clay/protonic acid emulsifying system in this application, the ability of the bitumen emulsion to suspend aggregates is greatly improved. In addition, the bitumen mixture of the present application can be stored stably for at least 12 hours in the equipment tank without sand settlement; can be continuous sprayed with large mechanized equipment for at least 1km without nozzle blockage; has no blockage caused by sedimentation and agglomeration at equipment filter screen and nozzles; has no sand precipitation on filter screen at the bottom of the tank after the completion of construction; thus, allows continuous large-scale mechanized spraying construction.

From comparison and analysis of Examples 19-23 and Comparative Examples 2-4, it was shown that the viscosity of the mixture system can be adjusted by adding an acidic or alkaline solution to the bitumen mixture.

The above mentioned descriptions only show particular implementations of the present application and but are not intended to limit the protection scope of the present application. Any modification or replacement readily figured out by a person skilled in the art within the technical scope disclosed in the present application shall fall within the protection scope of the present application. Therefore, the protection scope of the present application shall be determined by the protection scope of the claims.

## Claims

1. A binder emulsion, comprising the following components dispersed in water:
100 parts by mass of a binder,
from 10 to 30 parts by mass of clay, and
from 0.01 to 1.5 parts by mass of protonic acid,
wherein the binder emulsion has a pH value of from 2 to 12, and preferably from 6.5 to 7.5.

2. The binder emulsion according to claim 1, **characterized in that**, the binder emulsion has an average particle size of from 3 µm to 50 µm and preferably from 5 µm to 20 µm.

3. The binder emulsion according to claim 1, **characterized in that**, the clay comprises:
100 parts by mass of SiO₂; and
from 40 to 90 parts by mass of Al₂O₃.

4. The binder emulsion according to claim 1, **characterized in that**, the protonic acid comprises organic acid and/or inorganic acid,
wherein the organic acid comprises one or more of citric acid, malic acid, tartaric acid, acetic acid, malonic acid, succinic acid, oxalic acid, succinic acid and maleic acid; and/or
the inorganic acid comprises one or more of hydrochloric acid, boric acid and phosphoric acid.

5. The binder emulsion according to claim 1, **characterized in that**, the binder comprises a first binder and/or a second binder, wherein the first binder comprises:
100 parts by mass of heavy oil,
from 50 to 100 parts by mass of petroleum resin, and
from 0 to 1 parts by mass of adhesion promoter.

6. The binder emulsion according to claim 5, **characterized in that**, the second binder comprises:
100 parts by mass of heavy oil,
from 50 to 100 parts by mass of petroleum resin,
from 0 to 50 parts by mass of ethylene vinyl acetate copolymer,
from 0 to 20 parts by mass of styrene-butadiene-styrene block copolymer, and
from 0 to 1 parts by mass of adhesion promoter.

7. The binder emulsion according to claim 5 or 6, **characterized in that**, the heavy oil has a kinematic viscosity at 100 °C of from 20 to 100 mm²/s; and/or
the petroleum resin has a softening point of from 70 to 170°C; and/or
the petroleum resin has an acid value of from 0 to 16, preferably from 2 to 16.

8. A method for preparing a binder emulsion, comprising:
mixing and dispersing a clay and a protonic acid evenly in water, to obtain a first mixture; and
mixing and stirring the first mixture and a binder at an elevated temperature to emulsify the binder and obtain the binder emulsion.

9. A fog seal mixture with sand, comprising:
100 parts by mass of the binder emulsion according to any one of claims 1 to 7 or prepared by the method according to claim 8; and
from 5 to 70 parts by mass of an aggregate.

10. The fog seal mixture with sand according to claim 9, **characterized in that**, the aggregate comprises one or more of quartz sand, corundum sand, carborundum sand and water washed sand.

11. The fog seal mixture with sand according to claim 9, **characterized in that**, the mixture further comprises:
from 0 to 20 parts by mass, preferably from 5 to 20 parts by mass, of auxiliary powder;
from 0 to 20 parts by mass, preferably from 5 to 20 parts by mass, of pigment; and
from 0 to 50 parts by mass, preferably from 5 to 20 parts by mass, of latex additive.

12. The fog seal mixture with sand according to claim 11, **characterized in that**, the auxiliary powder comprises one or more of titanium dioxide powder, kaolin, heavy calcium, talc powder and microsilica; and/or
the latex additive comprises one or more of acrylic latex, one-component waterborne epoxy resin, two-component waterborne epoxy resin, one-component waterborne polyurethane, two-component waterborne polyurethane and styrene-butadiene copolymer latex.

13. A modified fog seal mixture with sand, comprising:
100 parts by mass of the fog seal mixture with sand according to any one of claims 9 to 12; and
from 0 to 20 parts by mass, preferably from 5 to 10 parts by mass, of an emulsion rejuvenating agent.

14. The modified fog seal mixture with sand according to claim 13, **characterized in that**, the emulsion rejuvenating agent comprises a mixture of scleroglucah and cationic emulsifier.

15. a bitumen emulsion, comprising the following components dispersed in water:
100 parts by mass of a bitumen,
from 10 to 30 parts by mass of clay, and
from 0.01 to 1.5 parts by mass of protonic acid,
wherein the bitumen emulsion has a pH value of from 2 to 12, and preferably from 6.5 to 7.5.

16. The bitumen emulsion according to claim 15, **characterized in that**, the bitumen emulsion has an average particle size of from 3 µm to 50 µm and preferably from 5 µm to 20 µm.

17. The bitumen emulsion according to claim 15, **characterized in that**, the clay comprises:
100 parts by mass of SiO₂ and
from 40 to 90 parts by mass of Al₂O₃.

18. The bitumen emulsion according to claim 15, **characterized in that**, the protonic acid comprises organic acid and/or inorganic acid,
wherein the organic acid comprises one or more of citric acid, malic acid, tartaric acid, acetic acid, malonic acid, succinic acid, oxalic acid, succinic acid and maleic acid; and/or
the inorganic acid comprises one or more of hydrochloric acid, boric acid and phosphoric acid.

19. The bitumen emulsion according to claim 15, **characterized in that**, the bitumen comprises a modified bitumen comprising:
100 parts by mass of a first base bitumen,
from 0 to 45 parts by mass of a second base bitumen,
from 0 to 15 parts by mass of ethylene vinyl acetate copolymer,
from 0 to 20 parts by mass of styrene-butadiene-styrene block copolymer, and
from 0 to 25 parts by mass of petroleum resin.

20. The bitumen emulsion according to claim 19, **characterized in that**, the modified bitumen comprises:
100 parts by mass of a first base bitumen,
from 15 to 45 parts by mass of a second base bitumen,
from 5 to 15 parts by mass of ethylene vinyl acetate copolymer,
from 5 to 15 parts by mass of styrene-butadiene-styrene block copolymer, and
from 10 to 25 parts by mass of petroleum resin.

21. The bitumen emulsion according to claim 19 or 20, **characterized in that**, the first base bitumen has a needle penetration of from 60 to 120; and/or
the second base bitumen has a needle penetration of from 1 to 30, and the second base bitumen preferably has a bitumenene content of greater than 35%; and/or
the petroleum resin has an acid value of from 0 to 16.

22. A method for preparing a bitumen emulsion, comprising:
mixing and dispersing a clay and a protonic acid evenly in water to obtain a first mixture; and
mixing and stirring the first mixture and a bitumen at an elevated temperature to emulsify the bitumen and obtain the bitumen emulsion.

23. a bitumen mixture, comprising:
100 parts by mass of the bitumen emulsion according to any one of claims 15 to 21; and
from 10 to 70 parts by mass of an aggregate.

24. The bitumen mixture according to claim 23, **characterized in that**, the aggregate comprises one or more of quartz sand, corundum sand, carborundum sand and water washed sand.

25. The bitumen mixture according to claim 23, **characterized in that**, the mixture further comprises:
from 0 to 20 parts by mass, preferably from 5 to 20 parts by mass, of latex additive;
wherein the latex additive comprises one or more of acrylic latex, one-component waterborne epoxy resin, two-component waterborne epoxy resin, one-component waterborne polyurethane, two-component waterborne polyurethane and styrene-butadiene copolymer latex.

26. A modified bitumen mixture, comprising:
100 parts by mass of the bitumen mixture according to any one of claims 23 to 25; and
from 0 to 10 parts by mass, preferably from 5 to 10 parts by mass, of an emulsion rejuvenating agent.

27. The modified bitumen mixture according to claim 26, **characterized in that**, the emulsion rejuvenating agent comprises a mixture of scleroglucah and cationic emulsifier.

28. A mixture system, comprising:
the fog seal mixture with sand according to any one of claims 9 to 12, the modified fog seal mixture with sand according to any one of claims 13 to 14, the bitumen mixture according to any one of claims 23 to 25, or the modified bitumen mixture according to any one of claims 26 to 27; and
a solution used to adjust the viscosity of the mixture system.

29. The mixture system according to claim 28, **characterized in that**, the solution comprises an acidic solution and/or an alkaline solution;
wherein the acidic solution has a pH value of from 1 to 3; and/or
the alkaline solution has a pH value of from 10 to 12.

30. A pavement structure, comprising one or more of the fog seal mixture with sand according to any one of claims 9 to 12, the modified fog seal mixture with sand according to any one of claims 13 to 14, the bitumen mixture according to any one of claims 23 to 25, the modified bitumen mixture according to any one of claims 26 to 27 and the mixture system according to any one of claims 28 to 29.
